# FASCICULE DE BREVET EUROPEEN

(11) **EP 0 612 179 B1**
(45) Date de publication et mention de la délivrance du brevet: **08.07.1998**
(21) Numéro de dépôt: 94400308.6
(22) Date de dépôt: 11.02.1994
(51) Int. Cl.: H04N 1/29, H04N 1/04

(54) **Télécopieur à imprimante électro-photographique**
Faksimile mit einem elektrophotographischen Drucker
Facsimile with electrophotographic printer

(30) Priorité: 15.02.1993 FR 9301669
(43) Date de publication de la demande: 24.08.1994
(73) Titulaire: SAGEM SA, F-75783 Paris Cédex 16 (FR)
(72) Inventeur: Vegeais, Patrick, F-78112 Fourqueux (FR)
(74) Mandataire: Fort, Jacques

(56) Documents cités:
- EP-A- 0 374 738
- WO-A-92/22018
- FR-A- 2 087 702
- US-A- 4 277 805
- US-A- 4 330 195
- PATENT ABSTRACTS OF JAPAN vol. 6, no. 107 (E-113)17 Juin 1982 & JP-A-57 038 063 (SANYO ELECTRIC CO. LTD.) 2 Mars 1982

## Description

La présente invention concerne les télécopieurs comportant une imprimante électro-photographique destinée à reproduire, sur un support papier, l'image représentée par un message entrant.

Ces imprimantes ont une source lumineuse fournissant un faisceau, modulé par le signal entrant, de balayage d'un tambour photosensible rotatif, des moyens de transfert de charges électrostatiques fonction de l'éclairement sur le tambour, des moyens de transfert d'encre sèche sur le tambour avec une densité fonction des charges, des moyens de transfert de cette encre du tambour sur un support papier et des moyens de fixation de l'encre.

Les télécopieurs de ce type utilisés à l'heure actuelle utilisent une encre sèche à deux composantes qui est fixée par pression et chauffage à une température de plusieurs centaines de degrés. Cette technologie d'impression et les mécanismes d'entraînement utilisés à l'heure actuelle conduisent à ne commencer l'impression qu'une fois que la totalité du contenu à imprimer correspondant à une page complète a été mémorisée. Une des raisons est que la durée de communication correspondant à une plage complète varie dans des limites considérables, pratiquement dans un rapport de 1 à 10, suivant le contenu informatif de la page. Pour les pages peu chargées en indications graphiques, la durée d'impression d'une page est supérieure à la durée de communication correspondante : en conséquence on mémorise le contenu des pages en attente d'impression. Cela conduit en pratique à prévoir dans les télécopieurs des plans mémoires ayant une capacité minimale d'environ 1 Moctet. En effet, l'information contenue dans une page nécessite, pour des pages très chargées, environ 380 Koctets. Le coût d'un tel plan mémoire est un élément important du coût des télécopieurs dits de bas de gamme même lorsqu'on utilise une mémoire vive dynamique, moins coûteuse qu'une mémoire statique.

L'un des motifs pour lesquels la durée d'impression est élevée est que le tambour photosensible et le papier circulent à une vitesse constante, qui est celle pour laquelle la durée de chauffage est celle nécessaire à la fixation.

Ce problème de coût de la mémoire tampon, jugée nécessaire jusqu'à présent, a conduit à utiliser, pour les télécopieurs dits de bas de gamme ou de début de gamme, des imprimantes sur papier thermique dont les inconvénients sont pourtant connus, notamment le coût élevé du papier et l'inadaptation à l'archivage à long terme.

On connaît par ailleurs (US-A-4.330.195) un appareil susceptible de plusieurs modes de fonctionnement. Dans l'un d'eux, il y a impressionnement du tambour pour représenter une feuille complète, à vitesse réduite, alors que le rouleau de développement est dégagé du tambour. Au cours d'une seconde rotation du tambour, il n'y a pas impressionnement, mais développement et transfert sur une feuille de papier.

La présente invention vise notamment à fournir un télécopieur à imprimante électro-photographique permettant d'éviter la nécessité d'une mémoire tampon d'entrée de grande capacité.

Dans ce but, l'invention propose notamment une imprimante conforme à la revendication 1.

Il suffit dans ce cas que l'imprimante ait une mémoire tampon de données d'entrée de capacité correspondant à deux lignes. L'une des lignes est lue pendant que l'autre est écrite.

Il est même possible d'éliminer en partie ou totalement la mémoire tampon en utilisant une source de lumière qui n'est pas constituée d'un seul élément luminescent, mais d'une barrette d'éléments : les pixels successifs d'une même ligne sont alors formés par des éléments différents, ce qui fait disparaître les problèmes de temps d'impressionnement. On peut en particulier utiliser une barrette de diodes électroluminescentes ou DEL. Cependant un balayage à partir d'une source unique telle qu'une diode laser reste possible.

En général, on sera amené, du fait que les informations concernant certaines lignes de pixels sont transmises en un temps très différent de celles en concernant d'autres, à adopter une vitesse variable de tambour photosensible. Une façon simple d'arriver à ce résultat consiste à utiliser un moteur pas-à-pas d'entraînement du tambour.

Du fait que l'impressionnement s'effectue à une vitesse susceptible de varier de ligne à ligne, le déroulement du papier n'est pas régulier s'il s'effectue à la même cadence que l'insolation du tambour. Or la durée de chauffage requise pour la fixation classique par pression et chauffage d'encre sèche à deux composants doit rester dans des limites relativement étroites. Il n'est en conséquence pas possible d'utiliser la solution courante, consistant à déposer l'encre au fur et à mesure de l'impressionnement du tambour et à transférer l'encre sur le papier à la même cadence.

Une première approche possible consiste à rendre la vitesse de circulation du papier dans les moyens de fixation indépendante de la vitesse d'impressionnement du tambour et de dépôt d'encre sur le tambour. Pour cela une solution est d'utiliser un tambour de diamètre tel que sa circonférence soit au moins égale à la longueur des feuilles de papier et de transférer les charges après insolation de toutes les lignes d'une page. Cela conduit à un diamètre très supérieur aux 3 à 4 cm couramment utilisés. Une autre solution consiste à prévoir, entre le tambour et les moyens de fixation par pression et chauffage, une boucle de circulation du papier de longueur suffisante pour stocker toute la longueur de la feuille entre le poste de transfert d'encre et le poste de fixation. Ces solutions accroissent l'encombrement du télécopieur de façon excessive.

Une approche préférable consiste en conséquence à utiliser une encre sèche pouvant être fixée par simple pression : on connaît déjà des encres constituées de micro-capsules écrasables pouvant être fixées par simple pression et pour lesquelles un maintien d'une plus ou moins longue durée entre rouleaux de pression ne se traduit pas par des variations de densité de gris.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est un schéma de principe d'un dispositif d'impression ayant une constitution générale couramment utilisée dans un télécopieur à impression laser, modifié conformément à un mode particulier de mise en oeuvre de l'invention ; et
- la figure 2 est un synoptique de principe, destiné à illustrer le fonctionnement d'un dispositif du genre montré en figure 1.

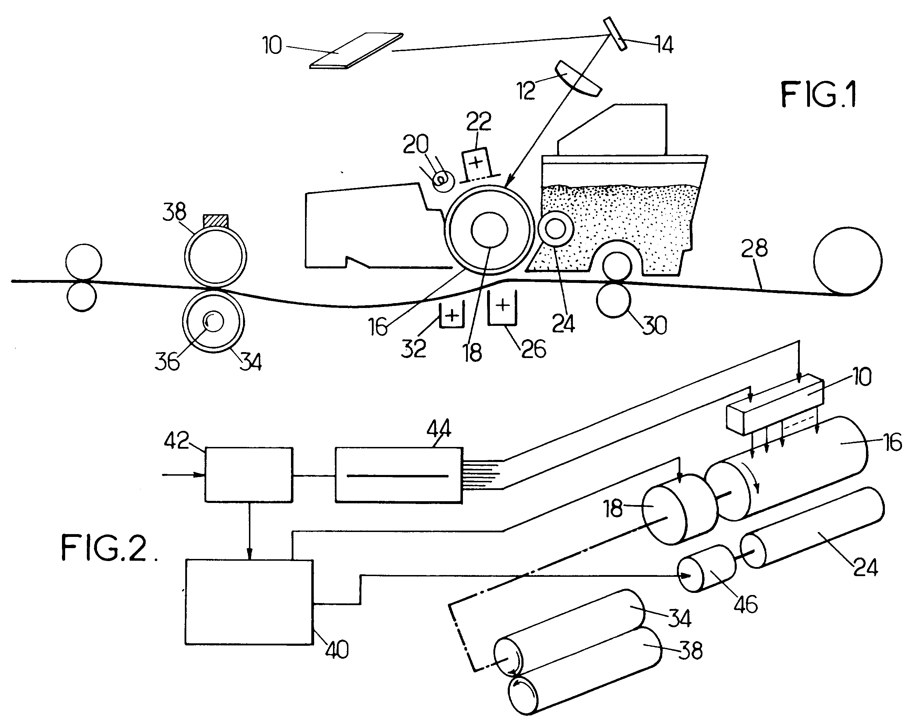

Un dispositif d'impression, ou imprimante, de télécopieur comporte une source de lumière modulable destinée à impressionner un tambour photosensible. Dans l'imprimante montrée en figure 1, la source n'est pas prévue pour générer un pixel à la fois. Elle comporte une barrette d'éléments électroluminescents 10 associés à une optique 12 de focalisation suivant des points, ou pixels successifs, d'une même ligne du tambour photosensible 16. Ce tambour est entraîné en rotation par un moteur principal pas-à-pas 18. Le tambour 18, de quelques centimètres de diamètre en général, est couvert d'une couche de matériau photoconducteur (matériau organique ou sélénium). Chaque génératrice du tambour 16 à son tour passe successivement devant une lampe 20 d'élimination de charges négatives résiduelles, devant un générateur Corona 22 de dépôt uniforme de charges électrostatiques négatives sur le tambour 16 et à l'emplacement d'exposition au faisceau lumineux. Le faisceau décharge la surface du tambour en chaque point en fonction de l'irradiation reçue par ce point.

Chaque génératrice du tambour passe ensuite à un emplacement de développement où l'image latente du tambour photosensible est transformée en image visible par dépôt d'une encre sèche. Cette encre est généralement à deux composants et entraînée par un rouleau magnétique 46 tournant à l'intérieur d'un manchon 24. L'encre adhère au tambour 16 sur les zones qui ont été exposées au faisceau de lumière, avec une densité de dépôts qui dépend du degré d'exposition. A un poste de transfert où un générateur 26 crée une décharge Corona, l'encre sèche est transférée sur une feuille de papier 28 amenée par un mécanisme d'approvisionnement 30. Le papier, éventuellement déchargé par passage à un poste 32, traverse enfin un poste de fixation.

Dans un télécopieur à imprimante laser classique, l'encre sèche est prévue pour être fixée par pressage et chauffage. Dans le dispositif montré sur la figure 2, l'encre sèche amenée par le rouleau magnétique est d'un type pouvant être fixé par simple pression. Le poste de fixation comprend en conséquence un premier rouleau presseur 34 entraîné soit par un moteur 36, soit par une liaison avec le moteur pas-à-pas 18, qui constitue alors un moteur principal remplissant plusieurs fonctions. Le poste comprend un rouleau d'appui 38 monté sur des paliers de façon à pouvoir tourner librement, dont l'écartement par rapport au rouleau presseur 34 est tel qu'il provoque la fixation.

Le fonctionnement de l'imprimante qui vient d'être décrite est généralement commandé par une unité de commande 40 à microprocesseur. Cette unité est reliée à des circuits électriques et téléphoniques de constitution générale connue. Ces circuits peuvent être regardés comme comportant un circuit 42 de détection d'appel entrant et de mémorisation d'un protocole de mise en liaison avec l'interlocuteur. Une fois la liaison réalisée, les données représentatives du document à reproduire sont reçues et mémorisées ligne par ligne dans une mémoire 44 ayant une capacité correspondant à deux lignes, du fait que l'une fonctionne en lecture pendant que l'autre est en cours d'écriture. Après chaque écriture d'une ligne, l'unité de commande 40 actionne le moteur principal 18 pour faire avancer le tambour 16 d'un pas. Le moteur principal peut également être prévu pour entraîner le rouleau de pressage 34. L'unité de commande 40 provoque également le fonctionnement des autres moyens nécessaires pour entraîner le papier et pour transférer l'encre sèche à l'aide d'un moteur 46 d'entraînement du rouleau magnétique.

Dans une telle imprimante, l'impression se fait au débit de la communication. Le tambour photosensible tourne à vitesse variable, ainsi que le rouleau de pressage 34.

Ce mode de réalisation implique l'utilisation d'une encre à fixation par pression, du fait que le temps de séjour dans le rouleau 34 est variable, ce qui est incompatible avec une fixation par chauffage. Dans une variante de réalisation, qui semble moins avantageuse, la vitesse de rotation du rouleau de pressage 34 est découplée de celle du tambour photosensible 16. Cela implique que la fixation ne commence qu'après développement et transfert sur le papier. Pour cela, on peut utiliser un tambour photosensible de diamètre tel que sa circonférence soit au moins égale à la longueur d'une feuille de format A4, ce qui conduit à un tambour d'environ 95 mm de diamètre, beaucoup plus encombrant que les tambours habituels de 3 à 4 cm de diamètre. Une autre solution consiste à prévoir, entre le tambour 16 et le rouleau 34, une distance de parcours au moins égale à la longueur d'une feuille A4. Mais là encore l'encombrement est très accru.

## Revendications

1. Télécopieur comportant une imprimante électro-photographique destinée à reproduire, sur un support papier, l'image représentée par un message de données entrant, ayant :
un tambour photosensible (16) entraînable en rotation dans un sens déterminé ;
une source lumineuse (10) fournissant un faisceau d'impressionnement du tambour photosensible suivant des lignes successives parallèles à l'axe de rotation, destinée à établir sur ce tambour des charges électrostatiques fonction de l'éclairement par le faisceau ;
des moyens pour décoder les données entrantes, ligne par ligne, et les fournir directement à la source lumineuse d'insolation du tambour, en provoquant ainsi l'impression ligne par ligne au débit d'entrée du message ;
un moteur d'entraînement du tambour à vitesse variable en fonction de la vitesse d'arrivée des données et de décodage ;
des moyens (24) de transfert d'encre sèche sur le tambour au fur et à mesure de la rotation avec une densité fonction des charges déposées, situés à un emplacement qui est en aval de ladite ligne dans le sens de rotation ; et
des moyens (26), situés en aval des moyens (24) de transfert d'encre sèche sur le tambour, destinés à transférer l'encre du tambour sur le support papier (28) en circulation, ligne par ligne, au fur et à mesure de l'arrivée de ces lignes ; et
des moyens pour recueillir le papier (34-38) du tambour après transfert et fixer l'encre par pression et éventuellement par chauffage.

2. Télécopieur selon la revendication 1, caractérisé en ce que l'encre sèche est d'un type fixable par pression et en ce que les moyens de fixation comprennent des rouleaux de pression (34,38) entraînés à la même vitesse linéaire que le tambour photosensible au cours de l'impressionnement.

3. Télécopieur selon la revendication 1 ou 2, caractérisé en ce que le tambour photosensible (16) est entraîné par un moteur pas-à-pas (18) au rythme du décodage des lignes.

4. Télécopieur selon la revendication 3, caractérisé en ce que la source de lumière est constituée par une barrette d'élements photoémetteurs précédée d'une mémoire de capacité égale au nombre des éléments photoémetteurs, égal au nombre de pixels d'une ligne.

5. Télécopieur selon la revendication 1, 2, ou 3, caractérisé en ce qu'il comporte une mémoire de données ayant une capacité de deux lignes de pixels.

6. Télécopieur selon la revendication 1, caractérisé par des moyens pour entraîner le papier dans les moyens de fixation à une vitesse de circulation constante et indépendante de la vitesse du tambour.

7. Télécopieur selon la revendication 6, caractérisé en ce que le papier parcourt, entre le transfert et la fixation, une distance au moins égale à la longueur d'une feuille de papier.

## Patentansprüche

1. Telefaxgerät, welches ein elektrophotographisches Druckwerk zum Reproduzieren des Bildes, das von einer eingehenden Datenübermittlung repräsentiert wird, auf einem papiernen Träger enthält und
- eine lichtempfindliche Trommel (16), die in einer festgelegten Richtung in Umdrehung versetzt werden kann,
- eine Lichtquelle (10), die entsprechend aufeinanderfolgenden Zeilen, die zur Drehachse parallel sind, ein Belichtungsbündel für die lichtempfindliche Trommel liefert und auf dieser Trommel in Abhängigkeit von der Beleuchtung durch das Bündel elektrostatische Ladungen entstehen läßt,
- Mittel, um die eingehenden Daten Zeile für Zeile zu dekodieren und sie direkt der Lichtquelle für die Isolation der Trommel zu liefern, wobei so die Belichtung Zeile für Zeile mit dem Drucksatz des Eingangs der Datenübermittlung bewirkt wird,
- einen Motor für den Antrieb der Trommel mit einer variablen Geschwindigkeit, die von der Geschwindigkeit des Dateneingangs und der Dokodierung abhängt,
- Mittel (24), um entsprechend der Umdrehung mit einer von den aufgebrachten Ladungen abhängigen Dichte trockene Druckerschwärze auf die Trommel zu übertragen, welche sich an einer Stelle befinden, die in der Umdrehungsrichtung nach der Zeile liegt,
- Mittel (26), die sich nach den Mitteln (24) zum Übertragen der trockenen Druckerschwärze auf die Trommel befinden und die Druckerschwärze von der Trommel auf den ablaufenden papierenen Träger (28) Zeile für Zeile entsprechend des Eingangs dieser Zeilen auftragen und
- Mittel (34, 38) zum Aufnehmen des Papiers der Trommel nach dem Auftragen und Fixieren der Druckerschwärze durch Druck und gegebenenfalls Erwärmung
umfaßt.

2. Telefaxgerät nach Anspruch 1, **dadurch gekennzeichnet, daß** die Druckerschwärze durch Druck fixierbar ist und daß die Fixiermittel Druckwalzen (34, 38) umfassen, die mit derselben linearen Geschwindigkeit wie die lichtempfindliche Trommel während der Belichtung angetrieben werden.

3. Telefaxgerät nach Anspruch 1 oder 2, **dadurch gekennzeichent, daß** die lichtempfindliche Trommel (16) von einem Schrittmotor (18) mit der Frequenz der Dokodierung der Zeilen angetrieben wird.

4. Telefaxgerät nach Anspruch 3, **dadurch gekennzeichnet, daß** die Lichtquelle aus einer Reihe photoemissiver Elemente besteht, der ein Speicher vorhergeht, dessen Kapazität gleich der Anzal der photoemissiven Elemente ist, die gleich der Zahl der Pixel einer Zeile ist.

5. Telefaxgerät nach Anspruch 1, 2 oder 3, **dadurch gekennzeichnet, daß** es einen Datenspeicher enthält, dessen Kapazität zwei Pixellinien beträgt.

6. Telefaxgerät nach Anspruch 1, **gekennzeichnet durch** Mittel, um das Papier in den Fixiermitteln mit einer Umdrehungsgeschwindigkeit vorwärts zu bewegen, die konstant und unabhängig von der Geschwindigkeit der Trommel ist.

7. Telefaxgerät nach Anspruch 6, **dadurch gekennzeichnt, daß** das Papier zwischen Auftragen und Fixieren eine Wegstrecke durchläuft, die mindestens gleich der Länge eines Blatts Papier ist.

## Claims

1. A telefax machine comprising an electrophotographic printer intended to reproduce on a paper support the image represented by an incoming data message, comprising:
a photosensitive drum (16) rotatable in a given direction;
a light source (10) delivering a printing beam on the photosensitive drum along successive lines parallel to the axis of rotation, the light source being intended to produce on said drum electrostatic charges dependent upon the illumination by the beam;
means for decoding the incoming data, line-by-line, and delivering them directly to the drum exposure light source, thus producing line-by-line printing at the start of the message entry;
a motor for driving the drum at a variable speed dependent upon the incoming speed of the data and the decoding speed;
means (24) for transferring dry ink to the drum as it rotates, in a density which is dependent upon the deposited charges, said means being situated at a position which is downstream of the said line in the direction of rotation; and
means (26), situated downstream of the means (24) for transferring dry ink to the drum, said means (26) being intended to transfer the ink from the drum to the moving paper support (28), line-by-line, as said lines arrive; and
means for collecting the paper (34 - 38) from the drum after transfer and fixing the ink by pressure and, if required, heating.

2. A telefax machine according to claim 1, characterised in that the dry ink is of a type which is fixable by pressure and in that the fixing means comprise pressure rollers (34, 38) driven at the same linear speed as the photosensitive drum during the printing operation.

3. A telefax machine according to claim 1 or 2, characterised in that the photosensitive drum (16) is driven by a stepping motor (18) in time with the decoding of the lines.

4. A telefax machine according to claim 3, characterised in that the light source comprises an array of photo-emitter elements preceded by a memory of a capacity equal to the number of photo-emitter elements, equal to the number of pixels of a line.

5. A telefax machine according to claim 1, 2 or 3, characterised in that it comprises a data memory having a capacity of two lines of pixels.

6. A telefax machine according to claim 1, characterised by means for driving the paper in the fixing means at a constant speed of movement which is independent of the drum speed.

7. A telefax machine according to claim 6, characterised in that between the transfer and fixing the paper travels a distance at least equal to the length of a sheet of paper.
